(19) Europäisches Patentamt
European Patent Office
Office européen des brevets

(11) **EP 0 706 274 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(51) Int Cl.$^7$: **H04L 7/027**, H04L 27/227

(21) Anmeldenummer: **95115354.3**

(22) Anmeldetag: **28.09.1995**

(54) **Verfahren zur Synchronisation eines Taktsignals im Empfänger eines Übertragungssystem**

Method for clock synchronisation in a receiver of a transmission system

Méthode pour la synchronisation d'horloge dans un récepteur d'un système de transmission

(84) Benannte Vertragsstaaten:
**AT CH DE GB IT LI NL**

(30) Priorität: **05.10.1994 DE 4435646**

(43) Veröffentlichungstag der Anmeldung:
**10.04.1996 Patentblatt 1996/15**

(73) Patentinhaber: **Siemens Mobile Communications S.p.A.**
**20126 Milano (IT)**

(72) Erfinder: **Lankl, Berthold, Dr.-Ing.**
**D-81371 München (DE)**

(74) Vertreter: **Heusler, Wolfgang, Dipl.-Ing. et al**
**v. Bezold & Sozien,**
**Patentanwälte,**
**Akademiestrasse 7**
**80799 München (DE)**

(56) Entgegenhaltungen:
• **D'ANDREA N A ET AL: "CARRIER PHASE INDEPENDENT DIGITAL CLOCK RECOVERY FOR GENERALIZED MINIMUM SHIFT KEYING" COMMUNICATION SYSTEMS: TOWARDS GLOBAL INTEGRATION. SINGAPORE ICCS '90, Bd. 2, November 1990, SINGAPORE, Seiten 28.6/1-/5, XP002065661**

• **AULIN T ET AL: "SYNCHRONIZATION PROPERTIES OF CONTINUOUS PHASE MODULATION" GLOBECOM '82, IEEE GLOBAL TELECOMMUNICATIONS CONFERENCE, Bd. 2, 29.November 1982, MIAMI, USA, Seiten 877-883, XP002065520**

• **HUBER J ET AL: "DATA-AIDED SYNCHRONIZATION OF COHERENT CPM-RECEIVERS" IEEE TRANSACTIONS ON COMMUNICATIONS, Bd. 40, Nr. 1, 1.Januar 1992, Seiten 178-189, XP000274963**

• **DE BUDA R: "COHERENT DEMODULATION OF FREQUENCY-SHIFT KEYING WITH LOW DEVIATION RATIO" IEEE TRANSACTIONS ON COMMUNICATIONS, Bd. 20, Nr. 3, Juni 1972, Seiten 429-435, XP002065521**

• **IWAO SASASE ET AL: "MULTI-H PHASE-CODED MODULATION" IEEE COMMUNICATIONS MAGAZINE, Bd. 29, Nr. 12, 1.Dezember 1991, Seiten 46-56, XP000287981**

• **YUTAKA MIYAKE ET AL: "A NEW TIMING EXTRACTION METHOD AND DATA INTERPOLATION FOR BLOCK DEMODULATION" SPEECH PROCESSING 2, DIGITAL SIGNAL PROCESSING, GLASGOW, MAY 23 - 26, 1989, Bd. VOL. 2, Nr. CONF. 14, 23.Mai 1989, INSTITUTE OF ELECTRICAL AND ELECTRONICS ENGINEERS, Seiten 1223-1226, XP000090324**

## Beschreibung

Die Erfindung bezieht sich auf eine Anordnung zur Synchronisation des Taktsignals im Empfänger eines mit einem digitalen Phasen- oder Frequenz-Modulationsverfahren arbeitenden Übertragungssystems auf das Empfangssignal unter Verwendung eines Taktphasendetektors als Teil einer Taktrückgewinnungsregelschleife.

In einem Datenübertragungsempfänger wird eine Taktsynchronisationsschaltung benötigt, um geeignete Abtastzeitpunkte für das Empfangssignal abzuleiten. Bei bandbreiteneffizienten Modulationsverfahren mit einer konstanten Einhüllenden, die beispielsweise bei Übertragungseinrichtungen über Funk oft angewendet werden wegen ihrer Unempfindlichkeit gegen nichtlineare Verzerrungen kann aus der Hüllkurve keine Information über die Taktphase abgeleitet werden. Bei diesen Modulationsverfahren steckt die gesamte Information in der Frequenz oder der Phase des Sendesignals. Besonders bandbreiteneffiziente Modulationsverfahren verwenden eine kontinuierliche Phase (CPM = Continuous Phase Modulation), um die Information zu übertragen.

Eine solche kontinuierliche Phasenmodulation ist beschrieben in einem Aufsatz von T.Aulin und C.W.Sundberg: "Continuous Phase Modulation - Part I:Full Response Signaling", IEEE Transaction on Communications, Vol. 29, March 1981, pp.196 bis 209 und in einem weiteren Aufsatz von T.Aulin, N.Rydbeck und C.W.Sundberg: "Continuous Phase Modulation - Part II: Partial Response Signaling", abgedruckt auf den Seiten 210 bis 225 derselben Zeitschrift. Das Sendesignal dieser Modulationsverfahren kann folgendermaßen dargestellt werden:

$$s(t) = 2\left(\frac{\sqrt{E}}{T}\right)\cos\left(2\pi f_0 + 2\pi h \sum_{i=-\infty}^{+\infty} \alpha_i q(t - iT)\right) \qquad (1)$$

Dabei ist E die Signalenergie innerhalb der Symboldauer T und h gibt den Modulationsindex an. Der verwendete Phasenpuls q(t), der im Bereich $0 < t < LT$ zeitbegrenzt ist, ist als das Integral eines Frequenzpulses g(t) definiert:

$$q(t) = \int_0^t g(t)dt \qquad (2)$$

Die Information ist durch die Koeffizienten $\alpha_i$ repräsentiert. In der Praxis wird für den Modulationsindex h eine rationale Zahl $h=p/q$ mit $p, q \in N$ verwendet; damit kann ein digitaler Modulator realisiert werden.

Übliche Taktrückgewinnungsverfahren, die mit Hilfe einer Nichtlinearität aus der Amplitude des zyklostationären Empfangssignals das Taktsignal wiedergewinnen, versagen wegen der Konstanz der Einhüllenden. Es sind aber Taktrückgewinnungsverfahren bekannt, die die Phaseninformation in eine Amplitudeninformation umsetzen, auf die herkömmliche Taktrückgewinnungsverfahren (Quadrierer) angewendet werden (vergleiche M.K.Simon, C.C.Wang: "Bit Synchronization of Differentially Detected MSK and GSMK", Proceedings ICC'85, 18.7.1-18.7.8). In einem Aufsatz von R.de Buda: "Coherent Demodulation of Frequency-Shift Keying With Low Deviation Ratio", IEEE Transactions on Communications, Juni 1972, Seiten 429 bis 435 wird für ein Frequenzmodulationsverfahren ein Taktrückgewinnungskonzept angegeben, das über eine Vervielfachung des Frequenzhubes arbeitet. Diese Verfahren sind in analoger Realisierung beschrieben und kommen deshalb in einer modernen Anwendung, die möglichst alle Signalverarbeitungskomponenten in einem ASIC integriert, nicht in Betracht. Ein in einem Aufsatz von Huber, Liu: "Data-Aided Synchronization of Coherent CPM-Receivers", IEEE Transactions on Communications, Vol. 40, Januar 1992, Seiten 178 bis 189 beschriebener digitaler Taktphasendetektor für Modulationsverfahren mit kontinuierlicher Phase weist den Nachteil auf, daß der Taktphasendetektor nicht unabhängig von der Trägerphase funktioniert, was zu sogenannten "hang-ups" beim Einrasten des Systems führen kann.

In D'ANDREA N A ET AL. "CARRIER PHASE INDEPENDENT DIGITAL CLOCK RECOVERY FOR GENERALIZED MINIMUM SHIFT KEYING' COMMUNI-CATION SYSTEMS: TOWARDS GLOBAL INTEGRATION. SINGAPORE ICCS '90, Bd. 2, November 1990, SINGAPORE, Seiten28.6/1-/5, XP002065661; AULIN T ET AL: "SYNCHRONISATION PROPERTIES OF CONTINUOUS PHASE MODULATION" GLOBECOM '82, IEEE GLOBAL TELE-COMMUNICATIONS CONFERENCE, Bd. 2, 29. November 1982, MIAMI, USA, Seiten 877-883, XP002065520; HUBER J ET AL: "DATA-AIDED SYNCHRONIZATION OF COHERENT CPM-RECEIVERS' IEEE TRANSACTIONS ON COMMUNICATIONS, Bd.40, Nr. 1, 1. Januar 1992, Seiten 178-189, XP000274963; DE BUDA R: "COHERENT DEMODULATION OF FRE-QUENCY-SHIFT KEYING WITH LOW DEVIATION RATIO' IEEE TRANSACTIONS ON COMMUNICATIONS; Bd. 20, Nr. 3, Juni 1972, Seiten 429-435, XP002065521; IWAO SASASE ET AL: 'MULTI-H PHASE-CODED MODULATION' IEEE COMMUNICATIONS MAGAZINE; Bd. 29. Nr. 12, 1. Dezember 1991, Seiten 46-56, XP000287981; YUTAKA MIYAKE ET AL: "A NEW TIMING EXTRACTION METHOD AND DATA INTERPOLATION FOR BLOCK DEMODULATION' SPEECH PROCESSING 2, DIGITAL SIGNAL PROCESSING, GLASGOW, MAY 23 - 26, 1989, Bd. VOL. 2, Nr. CONF. 14, 23. Mai 1989, INSTITUTE OF ELECTRICAL AND ELECTRONICS EN-GINEERS, Seiten 1223-1226, XP000090324 sind Synchronisationsverfahren beschrieben, die teilweise eine Nichtlinearität zur Erzeugung einer Spektrallinie bei der Taktfrequenz verwenden. Insbesondere aus D'ANDREA N A ET AL. ist eine Synchronisationsvorrichtung bekannt, die empfängerseitig die Gewinnung eines Taktsignals aus einem Empfangssignal ermöglicht, um den Empfänger zu synchronisieren. Hierzu weist die bekannte Vorrichtung eine Taktrückgewinnungsschleife auf, in der eine Nichtlinearität angeordnet ist, wobei die Nichtlinearität eine Spektrallinie bei der Taktfrequenz erzeugt. Nachteilig an dieser bekannten Vorrichtung ist jedoch die geringe Flexibilität.

Der Erfindung liegt deshalb die Aufgabe zugrunde, bei dem aus D' ANDREA et al. bekannten Verfahren die Flexibilität zu erhöhen.

Diese Aufgabe wird gemäß der Erfindung in der Weise gelöst, dass aus der im Empfänger vorliegenden Phaseninformation durch Erhöhung des Phasenhubes und eine nachfolgende, an das Modulationsverfahren angepasste Nichtlinearität eine Spektrallinie bei der Taktfrequenz erzeugt wird, deren Phase in einer in die Taktrückgewinnungsregelschleife eingefügten Taktphasenauswertung ausgewertet wird.

Bei der erfindungsgemäßen Ausgestaltung wird die Modulation auf der Empfangsseite nachträglich so verändert, dass eine Taktableitung aus dem so veränderten Empfangssignal mit kleinem Taktphasenjitter möglich ist. Durch die Änderung der Modulation selbst kann aus dem so veränderten, deutlich verbreiterten Spektrum, das diskrete Spektrallinien bei der Taktfrequenz enthält, sehr einfach eine Taktphaseninformation mit kleinem Jitter gewonnen werden. Hierbei wird die durch den Modulationsindex h festgelegte maximale Phasenänderung innerhalb einer Symboldauer auf der Empfangsseite soweit vergrößert, dass Vielfache von $2\pi$ als Phasenänderungen innerhalb einer Symboldauer auftreten. Dies bewirkt, dass in dem zugehörigen Spektrum dieses so veränderten Signals diskrete Spektrallinien u.a. bei der Taktfrequenz auftreten. Dies wird für die Ableitung einer Taktphaseninformation ausgenutzt. Der zugehörige Taktphasenjitter wird reduziert, weil die Information, die der Phase aufmoduliert ist, durch die Abänderung der ursprünglichen Modulation reduziert wird.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen:

Fig. 1    einen Demodulator mit Taktphasendetektor im Blockschaltbild,

Fig. 2    in einem Diagramm den Zeitverlauf der Phase eines 2REC-Signals, den Zeitverlauf der Phase nach Vervielfachung um den Faktor 4 (strichlierte Linie) und den Signalverlauf nach erfolgter Cos-Operation,

Fig. 3    das Leistungsdichtesprektrum eines 2REC-Signals am Ausgang der Cos-Operation mit dem Vervielfachungsfaktor 4 (Phase),

Fig. 4    einen Demodulator mit Taktphasendetektor einschließlich Differenzdetektor,

Fig. 5    einen Demodulator mit Taktphasendetektor (Frequenzumsetzer als Taktphasenauswertung),

Fig. 6    einen Demodulator mit Taktphasendetektor mit Interpolationsfilter,

Fig. 7    einen Demodulator mit Taktphasendetektor (DFT) und

Fig. 8    einen Demodulator mit Taktphasendetektor (modifizierte DFT).

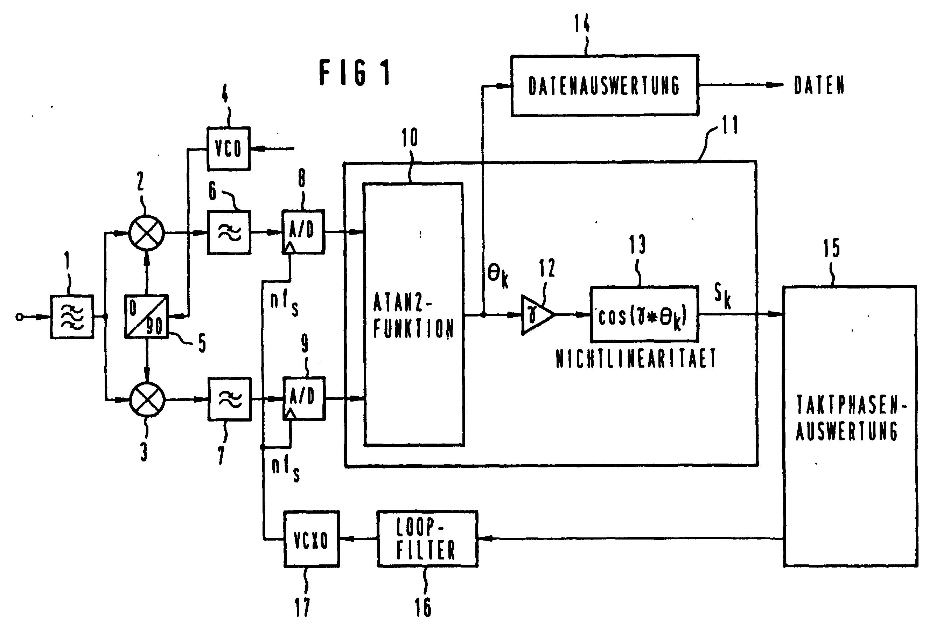

Figur 1 zeigt den Demodulator mit der entsprechenden Vorrichtung zur Erzeugung einer Spektrallinie bei der Taktfrequenz. Der Demodulator enthält einen eingangsseitigen Bandpaß 1, Mischer 2 und 3 in den Signalwegen für das Inphase und Quadratursignal, an die jeweils ein VCO 4 über ein 0°/90°-Phasendrehglied 5 (90°-Hybrid) angeschlossen ist. Den Mischern 2, 3 ist jeweils ein Filter 6, 7 und ein A/D-Wandler 8, 9 nachgeschaltet. Der Taktphasendetektor ist innerhalb des Kästchens 11 angeordnet. Er enthält eine Einheit 10 zur Bestimmung des Phasenwinkels (z.B. mit ATAN2-Tabelle, CORDIC-Algorithmus....), an deren Eingänge die beiden A/D-Wandler 8, 9 angeschlossen sind. Der Ausgang der Einheit 10 ist mit einem Vervielfacherelement 12 und einer nachfolgenden Nichtlinearität 13 verbunden, die weitere Elemente des Taktphasendetektors 11 bilden. Ferner ist an den Ausgang der Einheit 10 eine Datenauswertung 14 angeschlossen. Der Ausgang der Nichtlinearität ist mit einer Taktphasenauswertung 15, in der aus der Spektrallinie der Phase ermittelt wird, verbunden, die über ein Loop-Filter 16 und einen VCXO 17 an die beiden A/D-Wandler 8, 9 angeschlossen ist. Im Ausführungsbeispiel ist die Nichtlinearität, die entsprechend dem jeweiligen Modulationsverfahren unterschiedlich sein kann, als Cos-Operation (cos $(\gamma^* \theta_K)$) realisiert.

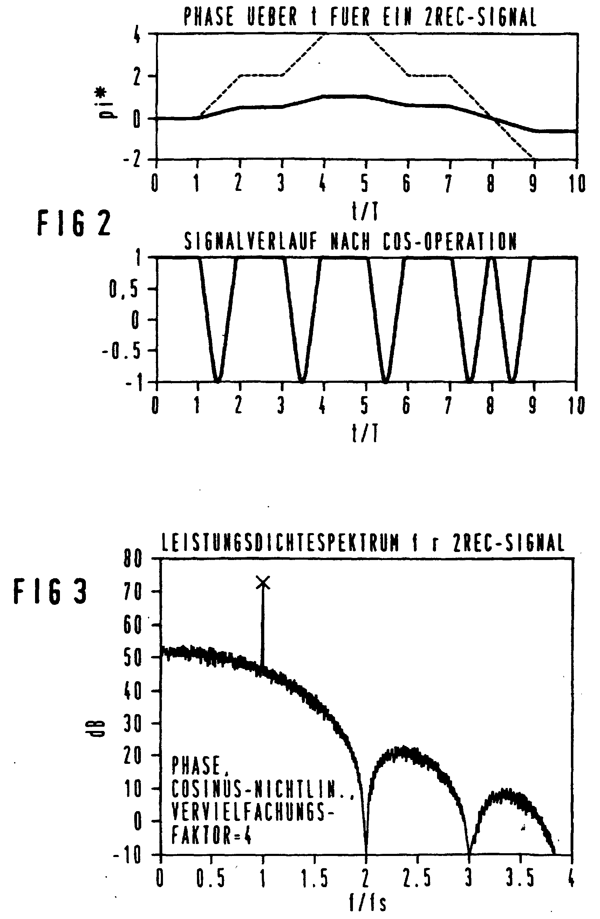

Die Funktion des Demodulators mit Taktphasendetektor läuft in der Weise ab, daß nach der Quadratur-Demodulation und nachfolgender Filterung (Mischprodukte und evtl. Empfangsfilterung) die Inphase- und Quadratursignale in der Einheit 10 abgetastet werden, in der danach die Bestimmung des Phasenwinkels erfolgt. Diese Winkelinformation kann dann auch zur Bestimmung der gesendeten Daten verwendet werden (Datenauswertung 14). Anschließend an diese Winkelbestimmung erfolgt die Erzeugung der Spektrallinie bei der Taktfrequenz. Dies wird nachfolgend anhand von Figur 2 näher erläutert, die in einem ersten Diagramm den Zeitverlauf der Phase eines 2REC-Signals und den Zeitverlauf der Phase nach Vervielfachung um den Faktor 4 (strichliert) und in einem zweiten Diagramm den Signalverlauf nach erfolgter Cos-Operation zeigt. Bei einem 2REC-System, von dem ausgehend die prinzipielle Wirkungsweise des Taktphasendetektors beschrieben werden soll, ist mit dem Modulationsindex h = 1/2 der Phasenimpuls q(t) eine Rampe, die innerhalb von 2 Symboldauern T linear mit der Zeit t von 0 nach 0,5 ansteigt und für Zeiten größer als 2T bei dem Wert 0,5 verharrt:

$$q(t) = \begin{cases} t/4T & \text{für } 0 \le 1 \le 2T \\ \\ 1/2 & \text{für } t \ge 2T \end{cases} \tag{3}$$

Es ergeben sich damit vier Möglichkeiten des Phasenverlaufs innerhalb einer Symboldauer T, nämlich lineare Phasenänderungen mit der Zeit t um die Werte $\pm \pi/2$ und $\pm 0$. Wenn auf der Empfangsseite dieser Phasenverlauf wieder rekonstruiert wird, wozu in einer digitalen Realisierung auch entsprechend viele Abtastwerte pro Symboldauer genügen, kann die Phasenänderung innerhalb einer Symboldauer vergrößert werden. Bei Wahl eines Vervielfachungsfaktors $\gamma = 4$ (Huberhöhung) ergeben sich die Phasenänderungen $\pm 2\pi$ und $\pm 0$ innerhalb einer Symboldauer T. Bildet man davon den Cosinus, so erhält man Abschnitte der entsprechenden Taktschwingung des Empfangssignals:

$$y(t) = \cos\left(2\pi \cdot \frac{t}{T}\right) \tag{4}$$

Diese Abschnitte sind entweder 0 oder Cosinusverläufe der Länge T, die aber immer phasenrichtig beginnen, weil die Phasenverläufe Vielfache von $2\pi$ sind (vgl. Diagramm 2 in Figur 2). Die Cos-Operation überlagert positive und negative Phasenverläufe konstruktiv, d.h. in dem Ausgangssignal nach der Cos-Operation ist eine starke Spektrallinie bei der Taktfrequenz enthalten, die für Taktrückgewinnungszwecke benutzt werden kann. Der Demodulator mit der entsprechenden Vorrichtung zur Erzeugung einer Spektrallinie bei der Taktfrequenz wurde vorstehend anhand von Figur 1 näher erläutert. Figur 3 zeigt das entsprechende Leistungsdichtespektrum für ein zweistufiges 2REC-Signal, wobei je Symboldauer 8 Abtastwerte und insgesamt 8192 Abtastwerte für die FFT (Fast Fourier Transformation) verwendet wurden. Die starke Spektrallinie bei der Taktfrequenz ist gut zu erkennen.

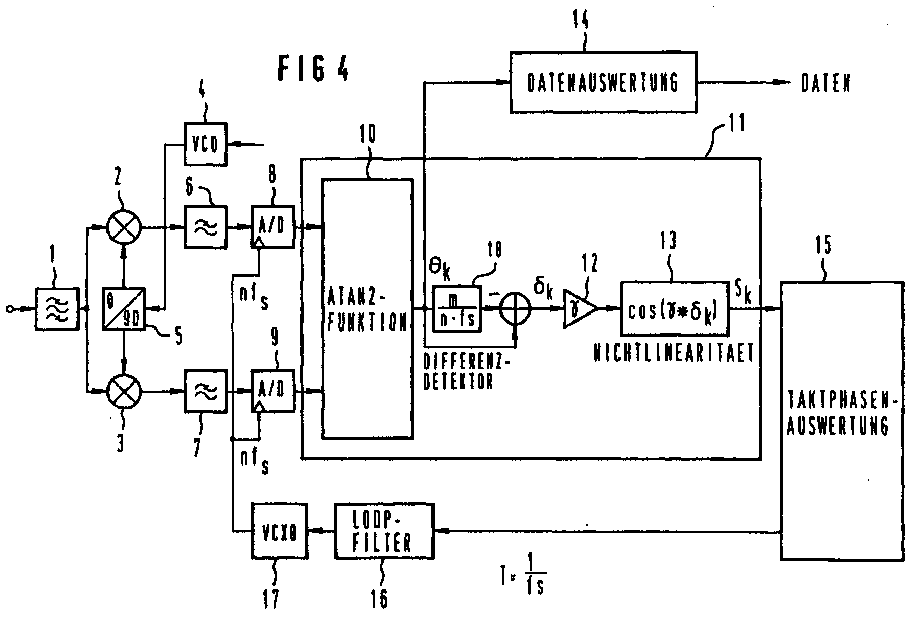

Figur 4 zeigt einen Demodulator mit Taktphasendetektor einschließlich Differenzdetektor. Ein Differenzdetektor wird verwendet, um die Unabhängigkeit des Taktphasendetektors von der Trägerphase zu erreichen. Beim Differenzdetektor wirken sich statische Trägerphasenfehler nicht aus. Moderate Trägerfrequenzablagen wirken sich nur in einer Degradation des Taktphasendetektorausgangssignals, nicht aber in einer anderen Taktphase aus. Das entsprechend modifizierte Blockschaltbild des Demodulators gemäß Figur 4 entspricht im wesentlichen dem nach Figur 1. Zwischen der Einheit 10 und dem Vervielfacher 12 ist hierbei ein Differenzdetektor 18 vorgesehen, der die Differenzphase zweier, im Abstand von m Abtastwerten aufeinanderfolgenden Phasenabtastwerte bestimmt. Für den Ausgang eines Differenzdemodulators, der Phasendifferenzen im Abstand einer Symboldauer T ermittelt, ergeben sich für den betrachteten Fall von zweistufigen 2REC CPM-Signalen Änderungen dieser Phasendifferenzen innerhalb einer Symboldauer von $\pm \pi/2$ und $\pm 0$. Dies sind dieselben Werte wie am Eingang des Differenzdemodulators. In diesem Fall ergibt sich wieder der Faktor 4 als optimal zur Vervielfachung der Phasenänderungen innerhalb einer Symboldauer T.

In den bisherigen Ausführungen wurde beschrieben, in welcher Weise aus der im Empfänger vorliegenden Phaseninformation durch Erhöhung des Phasenhubes und nachfolgende Nichtlinearität z.B. durch eine Cos-Operation eine starke Spektrallinie bei der Taktfrequenz erzeugt wird. Um damit eine Taktrückgewinnungsschaltung aufzubauen, muß die Phase dieser Spektrallinie ausgewertet werden. Dies kann auf unterschiedliche Weise geschehen.

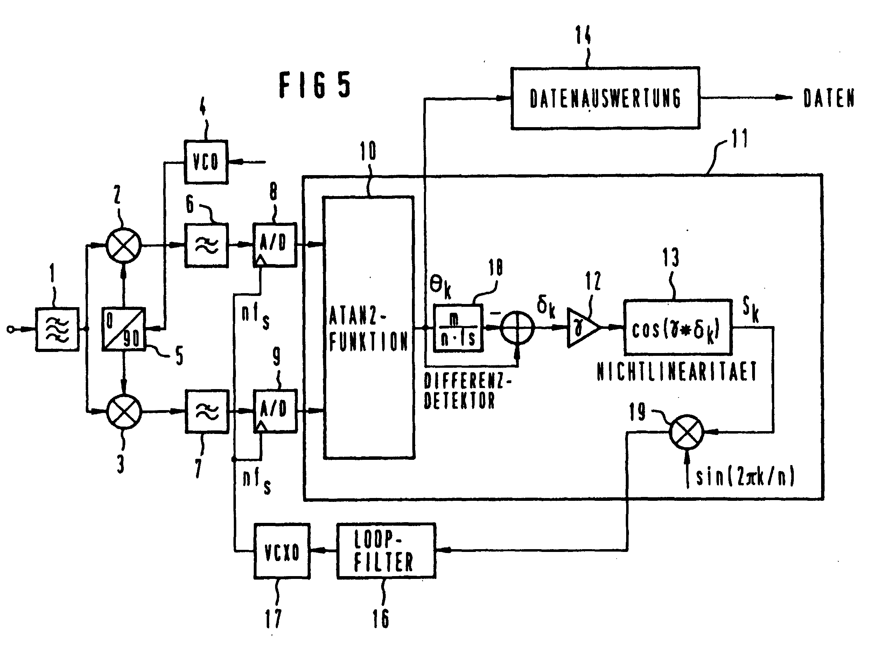

Figur 5 zeigt eine erste Möglichkeit, die darin besteht, die Spektrallinie bei der Taktfrequenz durch eine Frequenzumsetzung mit der Taktfrequenz auf die Frequenz 0 umzusetzen. Damit erhält man ein Taktphasenkriterium, dessen mittlere Ausgangsspannung abhängig von der Taktphase ist. Das mittlere Ausgangssignal nach der Nichtlinearität ist:

$$s(t) = \cos(2\pi(t-t_v)/T) \tag{5}$$

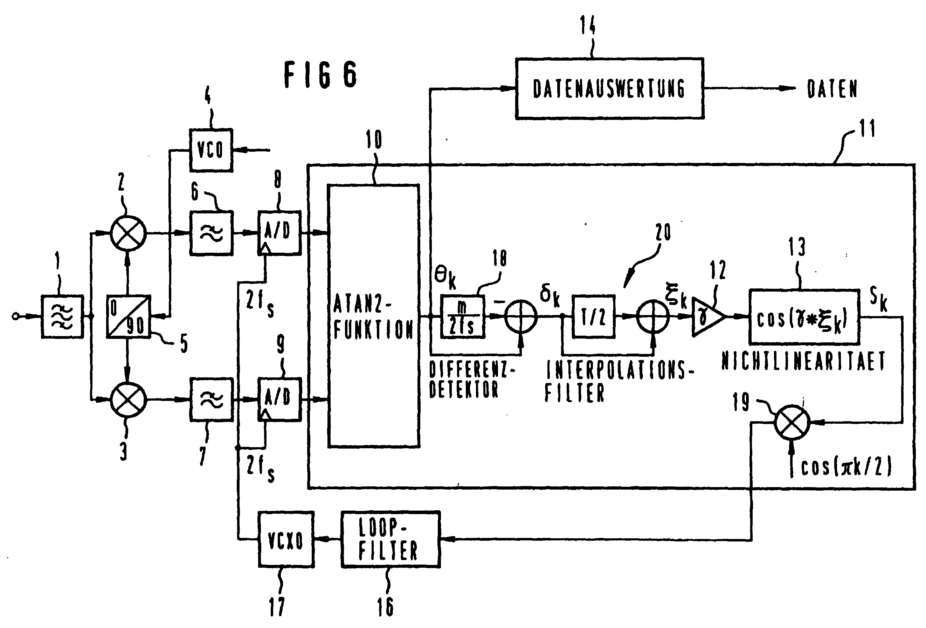

Die Verschiebung $t_v$ ergibt sich aufgrund der Signallaufzeit vom Sender zum Empfänger. Die korrekte Taktphase wäre also $t_0 = t_v$. Dies wird erreicht, indem das Signal s(t) mit dem Träger m(t) = sin(2πt/T) multipliziert wird. In einer digitalen Realisierung mit der Abtastrate 4/T im entsprechend ergänzten Blockschaltbild des Demodulators gemäß Figur 5 erfolgt dies digital in dem Multiplizierer 19. Da der Sinus für die Argumente k=0+l·4 und k=2+l·4 den Wert 0 hat, kommt man mit zwei Abtastwerten pro Symboldauer aus; d.h. die Abtastrate muß nur der doppelten Taktfrequenz entsprechen. Dies gilt allerdings nur bei Betrachtung des Taktphasendetektors. Für die Auswertung des Signals werden die Abtastwerte bei k=0+l·4 und eventuell auch k=2+l·4 gebraucht, so daß insgesamt 4 Abtastwerte pro Symboldauer nötig sind. Eine Lösung hierfür wird mit Hilfe eines Interpolationsfilters 20 erreicht, das zwischen Differenzdetektor 18 und Vervielfacher 12 eingeschaltet ist. Das Interpolationsfilter 20 berechnet aus den Abtastwerten bei k=0+l·4 und k=2+l·4 die Werte bei k=1+l·4 und k=3+l·4 (l = ganzzahlig), die nur für die Taktrückgewinnung benötigt werden. Damit ist es dann möglich, tatsächlich nur mit einer Abtastrate, die der doppelten Taktfrequenz entspricht, zu arbeiten. Ein entsprechendes Ausführungsbeispiel zeigt das Blockschaltbild nach Figur 6, das im wesentlichen mit den bereits vorstehend beschriebenen Demodulatorschaltungen übereinstimmt. Das hierbei verwendete, einfachste denkbare Interpolationsfilter ist ein FIR-Filter mit zwei Koeffizienten, die beide den Wert 1 haben und somit durch einen einfacher Addierer zu realisieren ist. Die für den Taktphasendetektor benötigten Zwischenabtastwerte werden also einfach aus den zwei benachbarten Abtastwerten linear interpoliert. Die Kombination aus Differenzdetektor und Interpolationsfilter kann als ein allgemeines Filter aufgefaßt werden, das bei geeigneter Auslegung zur Reduktion des systematischen Taktphasenjitters dienen kann (Prefilter).

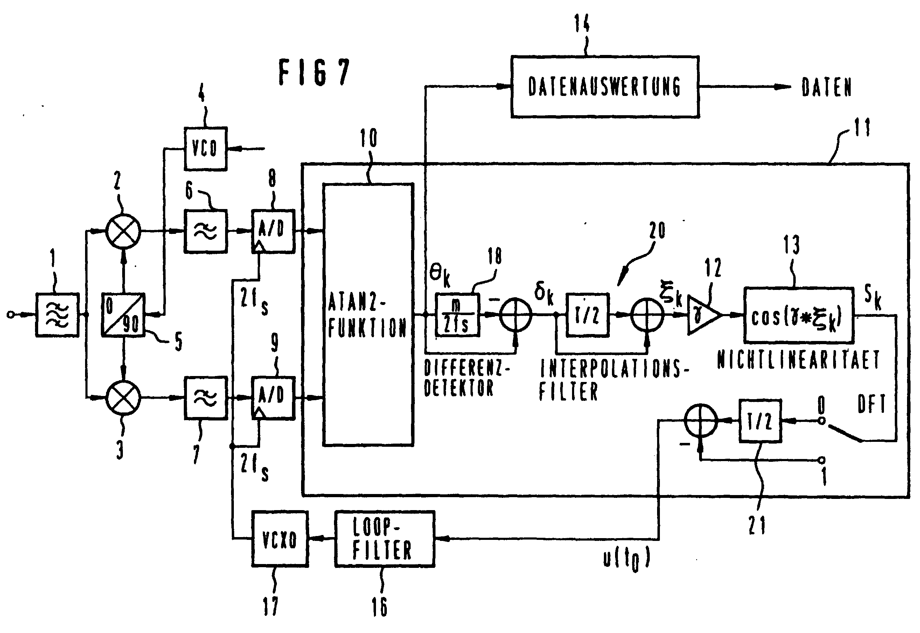

Eine weitere Möglichkeit der Auswertung der Phase der Spektrallinie besteht in einer einfachen DFT-Methode (DFT = Diskrete Fourier Transformation). Dabei wird einfach die Spektrallinie bei der Taktfrequenz mit der DFT bestimmt. Für eine einfache Realisierung kann dafür beispielsweise eine 4-Punkte DFT verwendet werden. Für die Gewinnung eines Taktphasenkriteriums läßt sich der Real- bzw. Imaginärteil verwenden; ist der Wert des Ausgangssignals im Mittel 0, dann ist die richtige Taktphase gefunden. Vergleichbar mit der Frequenzumsetzungsmethode ergibt sich hier die richtige Taktphase für die Signalabtastung durch die Auswertung des Imaginärteils. Dies bedeutet entweder eine Verwendung der vierfachen Taktfrequenz als Abtasttakt oder den Einsatz eines Interpolationsfilters, um mit der doppelten Taktfrequenz arbeiten zu können. Ein entsprechendes Ausführungsbeispiel mit einem einfachen Interpolationsfilter zeigt Figur 7, bei der die DFT-Elemente mit 21 bezeichnet sind.

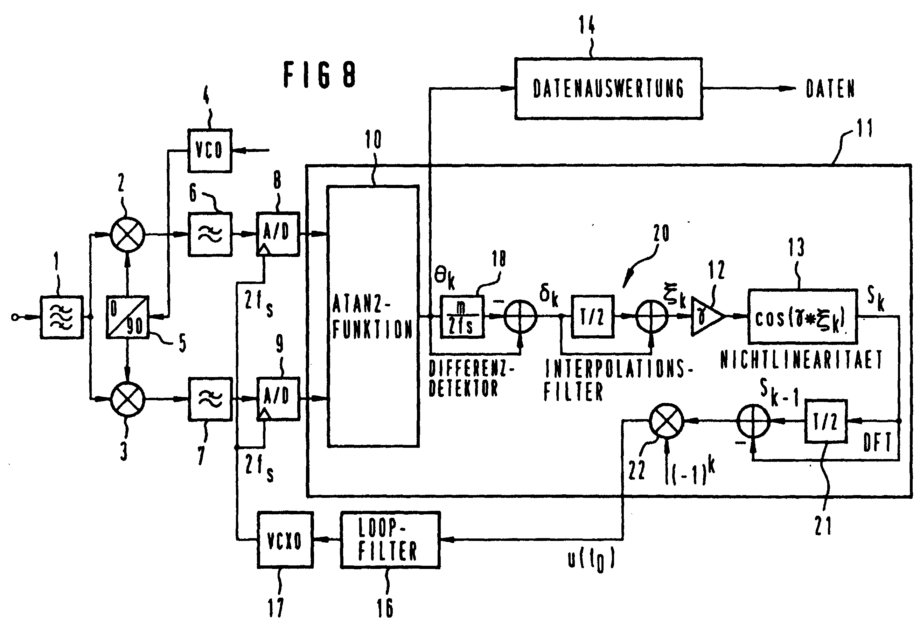

Eine Modifikation dieses DFT-Verfahrens beim Demodulator nach Figur 7 besteht darin, auch die um 180° verschobene Eingangsfolge auszunutzen. Eine phasenrichtige Addition der zwei ineinander verkämmten Ausgangsfolgen im nachfolgenden Loopfilter kann mit einer Multiplikation mit der Folge +1, -1, +1, -1, ... erreicht werden. Ein entsprechend modifiziertes Blockschaltbild zeigt Figur 8, bei dem der DFT 21 ein Multiplizierer 22 nachgeschaltet ist. Der Vorteil dieses Verfahrens besteht darin, daß das Geräusch reduziert wird.

## Patentansprüche

1. Verfahren zur Synchronisation eines Taktsignals ($f_s$) in einem Empfänger eines mit einem digitalen Phasen- oder Frequenz-Modulationsverfahren arbeitenden Übertragungssystems auf ein Empfangssignal,
   wobei ein Taktphasendetektor (15) als Teil einer Taktrückgewinnungsschleife (10-13, 15-22) verwendet wird und aus der im Empfänger vorliegenden Phaseninformation durch eine an das Modulationsverfahren angepasste Nichtlinearität (13) eine Spektrallinie ($s_k$) bei der Taktfrequenz erzeugt wird,
   deren Phase in einer in die Taktrückgewinnungsschleife (10-13, 15-22) eingefügten Taktphasenauswertung (15) ausgewertet wird,
   **dadurch gekennzeichnet,**
   **dass** zur Erzeugung der Spektrallinie ($s_k$) der Phasenhub erhöht wird,
   wobei die Nichtlinearität (13) der Erhöhung des Phasenhubs nachfolgt.

2. Verfahren nach Anspruch 1,
   **dadurch gekennzeichnet,**
   **dass** die durch den Modulationshub festgelegte maximale Phasenänderung so groß ist,
   **dass** Vielfache von 2π als Phasenänderungen innerhalb einer Symboldauer (T) auftreten und
   **dass** in dem zugehörigen Spektrum dieses so veränderten Signals Spektrallinien ($s_k$) auch bei der Taktfrequenz auftreten, aus denen eine Taktphaseninformation abgeleitet wird.

**3.** Verfahren nach Anspruch 1 oder 2,
**dadurch gekennzeichnet**,
die Verwendung eines Differenzdetektors (18), der die Differenzphase zweier, im Abstand von m Abtastzeitpunkten aufeinanderfolgender Phasenabtastwerte bestimmt.

**4.** Verfahren nach einem der Ansprüche 1 bis 3,
**dadurch gekennzeichnet,**
**dass** die Spektrallinie ($s_k$) bei der Taktfrequenz durch eine Frequenzumsetzung in einem als Taktphasenauswertung wirkenden Frequenzumsetzer (19) mit der Taktfrequenz auf die Frequenz Null umgesetzt wird unter Gewinnung eines Taktphasenkriteriums, dessen mittlere Ausgangsspannung von der Taktphase abhängig ist.

**5.** Verfahren nach einem der Ansprüche 1 bis 4,
**gekennzeichnet durch**
die Verwendung eines Interpolationsfilters (20), das aus den für die Signalauswertung notwendigen Abtastwerten die für die Taktrückgewinnung benötigten Zwischenwerte berechnet und damit eine höhere Abtastrate vermeidet.

**6.** Verfahren nach einem der Ansprüche 1 bis 5,
**dadurch gekennzeichnet,**
**dass** die Spektrallinie ($s_k$) bei der Taktfrequenz mit einer diskreten Fourier-Transformation bestimmt wird unter Verwendung des Real- bzw. Imaginärteils für die Gewinnung eines Taktphasenkriteriums.

**7.** Verfahren nach einem der Ansprüche 1 bis 6,
**dadurch gekennzeichnet,**
**dass** die Spektrallinie ($s_k$) bei der Taktfrequenz mit einer diskreten Fourier-Transformation in einer Weise bestimmt wird, bei der auch die 180° verschobene Eingangsfolge ausgenutzt wird, indem eine phasenrichtige Addition der zwei ineinander verkämmten Ausgangsfolgen in einem nachfolgenden Loopfilter mit einer Multiplikation mit der Folge +1, -1, +1, -1, ... erreicht wird.

**8.** Verfahren nach einem der Ansprüche 1 bis 7,
**dadurch gekennzeichnet,**
**dass** die Nichtlinearität durch eine Cos-Operation realisiert wird.

**Claims**

**1.** Method for the synchronisation of a clock signal ($f_s$), in a receiver of a transmission system operating with a digital phase- or frequency-modulation process, to a received signal,
a clock phase detector (15) being used as part of a clock recovery loop (10-13, 15-22); and
there being generated from the phase information present in the receiver, by a non-linearity (13) matched to the modulation process, a spectral line ($s_k$) at the clock frequency,
the phase of which is evaluated in a clock phase evaluation stage (15) incorporated in the clock recovery loop (10-13, 15-22),
**characterised in that**
the phase stroke is increased to generate the spectral line ($s_k$),
the non-linearity (13) following the increase of the phase stroke.

**2.** Method according to claim 1,
**characterised in that**
the maximum phase change fixed by the modulation stroke is so great
that multiples of $2\pi$ occur as phase changes within a symbol duration (T) and
that in the associated spectrum of this thus changed signal, spectral lines ($s_k$), from which clock phase information is derived, also occur at the clock frequency.

**3.** Method according to claim 1 or 2,
**characterised by**
the use of a difference detector (18), which determines the differential phase of two sampled phase values succeeding one another at an interval of m scanning instants.

**4.** Method according to one of claims 1 to 3,
**characterised in that**
the spectral line ($s_k$) at the clock frequency is converted by a frequency conversion in a frequency converter (19), acting as a clock phase evaluation stage, with the clock frequency to the frequency zero, obtaining a clock phase criterion, the average output voltage of which is dependent on the clock phase.

**5.** Method according to one of claims 1 to 4,
**characterised by**
the use of an interpolation filter (20), which calculates from the sampled values necessary for the signal evaluation the intermediate values required for the clock, recovery and thus avoids a higher scanning rate.

**6.** Method according to one of claims 1 to 5,
**characterised in that** the spectral line ($s_k$) at the clock frequency is determined by means of a discrete Fourier transformation using the real part or respectively the imaginary part to obtain a clock phase criterion.

**7.** Method according to one of claims 1 to 6,
**characterised in that**
the spectral line ($s_k$) at the clock frequency is determined by means of a discrete Fourier transformation in a manner in which the input sequence shifted by 180° is also utilised, by a phase-correct addition of the two interlaced output sequences being achieved in a following loop filter by means of a multiplication with the sequence +1, -1, +1, -1 ...

**8.** Method according to one of claims 1 to 7,
**characterised in that**
the non-linearity is realised by a cos operation.

**Revendications**

**1.** Procédé de synchronisation d'un signal de rythme ($f_s$) dans un récepteur d'un système de transmission fonctionnant avec un procédé de modulation numérique de phase ou de fréquence, sur un signal de réception, dans lequel un détecteur de phase de rythme (15) est utilisé comme partie d'une boucle de récupération de rythme (10-13, 15-22) et une ligne spectrale ($s_k$) est produite à la fréence de rythme à partir de l'information de phase se trouvant dans le récepteur, par une non-linéarité (13) adaptée au procédé de modulation, ligne spectrale dont la phase est évaluée dans un dispositif d'évaluation de phase de rythme (15) inséré dans la boucle de récupération de rythme (10-13, 15-22), **caractérisé en ce que** pour produire la ligne spectrale ($s_k$) on augmente la déviation de phase, la non-linéarité (13) suivant l'augmentation de la déviation de phase.

**2.** Procédé selon la revendication 1, **caractérisé en ce que** la variation de phase maximale, définie par l'amplitude de la modulation, est suffisamment grande pour que des multiples de $2\pi$ se produisent en tant que variations de phase à l'intérieur d'une durée de symbole (T), et **en ce que** dans le spectre correspondant de ce signal ainsi modifié, il se produit des lignes spectrales ($s_k$) également à la fréquence de rythme, à partir desquelles est dérivée une information de phase de rythme.

**3.** Procédé selon la revendication 1 ou 2, **caractérisé par** l'utilisation d'un détecteur différentiel (18) qui détermine la phase différentielle de deux valeurs d'analyse de phase successives à la distance de m instants d'analyse.

**4.** Procédé selon l'une des revendications 1 à 3, **caractérisé en ce que** la ligne spectrale ($s_k$) à la fréquence de rythme est convertie à la fréquence zéro par une conversion de fréquence dans un convertisseur de fréquence (19) agissant comme un dispositif d'évaluation de phase de rythme, à la fréquence de rythme, et on obtient un critère de phase de rythme dont la tension de sortie moyenne dépend de la phase de rythme.

**5.** Procédé selon l'une des revendications 1 à 4, **caractérisé par** l'utilisation d'un filtre d'interpolation (20) qui, à partir des valeurs d'analyse nécessaires à l'exploitation des signaux, calcule les valeurs intermédiaires nécessaires à la récupération de rythme et évite ainsi une fréquence d'analyse supérieure.

**6.** Procédé selon l'une des revendications 1 à 5, **caractérisé en ce que** la ligne spectrale ($s_k$) à la fréquence de rythme est déterminée par une transformation de Fourier discrète avec utilisation de la partie réelle ou imaginaire pour l'obtention d'un critère de phase de rythme.

**7.** Procédé selon l'une des revendications 1 à 6, **caractérisé en ce que** la ligne spectrale ($s_k$) à la fréquence de rythme est déterminée par une transformation de Fourier discrète d'une manière par laquelle on exploite aussi la succession d'entrée décalée de 180°, **en ce qu'**on obtient une addition de phase correcte des deux successions de départ imbriquées l'une dans l'autre, dans un filtre de boucle suivant, par une multiplication par la succession (+1, -1, +1, -1,...).

**8.** Procédé selon l'une des revendications 1 à 7, **caractérisé en ce que** la non-linéarité est réalisée par une opération cosinus.

FIG 1

**FIG 2**

PHASE UEBER t FUER EIN 2REC-SIGNAL

SIGNALVERLAUF NACH COS-OPERATION

**FIG 3**

LEISTUNGSDICHTESPEKTRUM f r 2REC-SIGNAL

PHASE,
COSINUS-NICHTLIN.,
VERVIELFACHUNGS-
FAKTOR=4

FIG 4

DATEN

DATENAUSWERTUNG   14

TAKTPHASEN-AUSWERTUNG   15

$S_k$

$\cos(\gamma * \delta_k)$   13

NICHTLINEARITAET

$\gamma$   12

$\delta_k$

$\dfrac{m}{n \cdot fs}$   18

$\theta_k$

DIFFERENZ-DETEKTOR

ATAN2-FUNKTION   10

11

A/D   8

A/D   9

$n fs$

$n fs$

VCO

VCXO   17

LOOP-FILTER   16

$T = \dfrac{1}{fs}$

0 90   5

1

2

3

6

7

FIG 5

EP 0 706 274 B1

FIG 6

FIG 7

DATEN

DATENAUSWERTUNG 14

NICHTLINEARITAET

$S_k$

$\cos(\gamma * \xi_k)$ 13

DFI

0
1

T/2 21

$\gamma$ 12

$\xi_k$

20

T/2

INTERPOLATIONS-FILTER

$\delta_k$

$\frac{n}{2T_s}$ 18

$\Theta_k$

DIFFERENZ-DETEKTOR

11

10

ATAN2-FUNKTION

$u(t_0)$

LOOP-FILTER 16

VCXO 17

A/D 8

A/D 9

$2f_s$

$2f_s$

VCO 4

6

7

5

90
0

2

3

1

FIG 8

DATENAUSWERTUNG 14 → DATEN

VCO 4

DIFFERENZ-DETEKTOR 18

INTERPOLATIONS-FILTER 20

NICHTLINEARITAET 13

ATANZ-FUNKTION 10

A/D 8    A/D 9

$\frac{m}{2f_s}$   $\theta_k$

$\delta_k$   $T/2$   $\xi_k$   $\gamma$ 12   $\cos(\gamma*\xi_k)$   $S_k$

$S_{k-1}$   $T/2$ 21   DFT

22   $(-1)^k$

$2f_s$

VCXO 17   LOOP-FILTER 16   $u(t_0)$

EP 0 706 274 B1